# EUROPEAN PATENT APPLICATION

(11) **EP 2 913 966 A1**
(43) Date of publication of application: **02.09.2015**
(21) Application number: 13856636.9
(22) Date of filing: 13.11.2013
(51) Int. Cl.: H04L 12/753

(54) **METHOD AND ROUTER DEVICE FOR NEIGHBOR RELATIONSHIP PROCESSING**

(30) Priority: 20.11.2012 CN 201210472080
(71) Applicant: Huawei Technologies Co., Ltd., Longgang District Shenzhen, Guangdong 518129 (CN)
(72) Inventor: GAO, Qiangzhou, Shenzhen Guangdong 518129 (CN); TENG, Xiao, Shenzhen Guangdong 518129 (CN)
(74) Representative: Maiwald Patentanwalts GmbH
(86) International application number: PCT/CN2013/087045
(87) International publication number: WO 2014/079334

(57) **Abstract**

Embodiments of the present invention provide a neighbor relationship processing method and a routing device. The method includes: receiving, by a first routing device, a packet that is sent by a second routing device and used for requesting establishment of a neighbor relationship; determining, by the first routing device, whether the first routing device and the second routing device are both non-designated routing devices DRothers; and if the first routing device determines that the first routing device and the second routing device are both DRothers, discarding, by the first routing device, the packet used for requesting establishment of a neighbor relationship. According to the neighbor relationship processing method and the routing device provided in the embodiments of the present invention, when the first routing device and the second routing device are both DRothers, the packet used for requesting establishment of a neighbor relationship is discarded, which reduces the number of neighbors maintained by the first routing device and reduces an occupation ratio of a system resource of the first routing device, such as a CPU or memory.

## Description

This application claims priority to Chinese Patent Application No. 201210472080.1, filed with the Chinese Patent Office on November 20, 2012 and entitled "NEIGHBOR RELATIONSHIP PROCESSING METHOD AND ROUTING DEVICE", which is incorporated herein by reference in its entirety.

### TECHNICAL FIELD

The present invention relates to communications technologies, and in particular, to a neighbor relationship processing method and a routing device.

### BACKGROUND

Open Shortest Path First (Open Shortest Path First, hereinafter referred to as OSPF) is one of the Interior Gateway Protocol (Interior Gateway Protocol, hereinafter referred to as IGP) and used for making routing decisions in a single autonomous system (Autonomous system, hereinafter referred to as AS).

The OSPF establishes a neighbor relationship between routing devices to advertise a network interface state, to establish a link state database and generate a shortest path tree, and each OSPF routing device uses a shortest path tree to construct a routing table.

In the prior art, a hello (Hello) packet is sent between OSPF routing devices to establish and maintain a neighbor relationship. In a same broadcasting network, a routing device with a highest priority is a designated routing device (Designated Routing device, hereinafter referred to as DR), a routing device with a second highest priority is a backup designated routing device (Backup Designated Routing device, hereinafter referred to as BDR), and a remaining routing device is a non-designated routing device (DRother). By means of election, each routing device learns a DR, a BDR, and a DRother in the same broadcasting network, and sets an interface state corresponding to each routing device to a DR state, a BDR state, or a DRother state. A DR and a BDR separately maintain a fully adjacent (FULL) neighbor relationship with all DRothers, and a 2-way communication (2-way) neighbor relationship is maintained between the DRothers. A link state database is not exchanged between routing devices in a 2-way neighbor relationship, and a link state database is exchanged between routing devices in a FULL neighbor relationship. A size of a Hello packet sent between routing devices depends on the number of neighbors maintained by a routing device. If the number of neighbors maintained by a routing device is N, the size of the Hello packet is 44+N*4.

In a trend of network flatness, the number of routing devices in a same broadcasting network is large. In the prior art, a large number of neighbor relationships need to be maintained between routing devices, which occupies a system resource of a routing device, such as a CPU or memory.

### SUMMARY

Embodiments of the present invention provide a neighbor relationship processing method and a routing device, which implement that a large number of neighbor relationships do not need to be maintained between routing devices, thereby reducing an occupation ratio of a system resource of a routing device, such as a CPU or memory.

According to a first aspect, an embodiment of the present invention provides a neighbor relationship processing method, including:
receiving, by a first routing device, a packet that is sent by a second routing device and used for requesting establishment of a neighbor relationship;
determining, by the first routing device, whether the first routing device and the second routing device are both non-designated routing devices (DRother); and
if the first routing device determines that the first routing device and the second routing device are both DRothers, discarding, by the first routing device, the packet used for requesting establishment of a neighbor relationship.

In a first possible implementation manner of the first aspect, the determining, by the first routing device, whether the first routing device is a DRother includes:
checking, by the first routing device, whether an interface state of the first routing device is DRother, and if the interface state of the first routing device is DRother, determining, by the first routing device, that the first routing device is a DRother.

In a second possible implementation manner of the first aspect, the determining, by the first routing device, whether the first routing device is a DRother includes:
checking, by the first routing device, whether a routing device priority of the first routing device is lower than a first preset priority, and if the priority of the first routing device is lower than the first preset priority, determining, by the first routing device, that the first routing device is a DRother.

In a third possible implementation manner of the first aspect, the determining, by the first routing device, whether the first routing device is a DRother includes:
checking, by the first routing device, whether a routing device priority of the first routing device is 0, and if the routing device priority of the first routing device is 0, determining, by the first routing device, that the first routing device is a DRother.

With reference to the first aspect or any possible implementation manner of the first possible implementation manner to the third possible implementation manner of the first aspect, in a fourth possible implementation manner, the determining, by the first routing device, whether the second routing device is a DRother includes:
checking, by the first routing device, whether an interface state of the second routing device is DRother, and if the interface state of the second routing device is DRother, determining, by the first routing device, that the second routing device is a DRother.

With reference to the first aspect or any possible implementation manner of the first possible implementation manner to the third possible implementation manner of the first aspect, in a fifth possible implementation manner, the determining, by the first routing device, whether the second routing device is a DRother includes:
checking, by the first routing device, whether a routing device priority of the second routing device is lower than a second preset priority, and if the routing device priority of the second routing device is lower than the second preset priority, determining, by the first routing device, that the second routing device is a DRother.

With reference to the first aspect or any possible implementation manner of the first possible implementation manner to the third possible implementation manner of the first aspect, in a sixth possible implementation manner, the determining, by the first routing device, whether the second routing device is a DRother includes:
checking, by the first routing device, whether a routing device priority of the second routing device is 0, and if the routing device priority of the second routing device is 0, determining, by the first routing device, that the second routing device is a DRother.

With reference to the first aspect or any possible implementation manner of the first possible implementation manner to the sixth possible implementation manner of the first aspect, in a seventh possible implementation manner, before the determining, by the first routing device, whether the first routing device and the second routing device are both DRothers, the method further includes:
checking, by the first routing device, whether the interface state of the first routing device is a DR, BDR, or DRother election completion state; and
the determining, by the first routing device, whether the first routing device and the second routing device are both DRothers is executed when the first routing device determines that the interface state of the first routing device is the DR, BDR, or DRother election completion state.

With reference to the first aspect or any possible implementation manner of the first possible implementation manner to the seventh possible implementation manner of the first aspect, in an eighth possible implementation manner, the neighbor relationship establishment packet is a Hello packet.

According to a second aspect, an embodiment of the present invention provides a routing device, including:
a receiving module, configured to receive a packet that is sent by a second routing device and used for requesting establishment of a neighbor relationship;
a determining module, configured to determine whether the routing device and the second routing device are both non-designated routing devices (DRother); and
a processing module, configured to: if the routing device and the second routing device are both DRothers, discard the packet used for requesting establishment of a neighbor relationship.

In a first possible implementation manner of the second aspect, the determining module is specifically configured to check whether an interface state of the routing device is DRother; and if the interface state of the routing device is DRother, determine that the routing device is a DRother.

In a second possible implementation manner of the second aspect, the determining module is specifically configured to check whether a routing device priority of the routing device is lower than a first preset priority; and if the routing device priority of the routing device is lower than the first preset priority, determine that the routing device is a DRother.

In a third possible implementation manner of the second aspect, the determining module is specifically configured to check whether a routing device priority of the routing device is 0; and if the routing device priority of the routing device is 0, determine that the routing device is a DRother.

With reference to the second aspect or any possible implementation manner of the first possible implementation manner to the third possible implementation manner of the second aspect, in a fourth possible implementation manner, the determining module is specifically configured to check whether an interface state of the second routing device is DRother; and if the interface state of the second router is DRother, determine that the second routing device is a DRother.

With reference to the second aspect or any possible implementation manner of the first possible implementation manner to the third possible implementation manner of the second aspect, in a fifth possible implementation manner, the determining module is specifically configured to check whether a routing device priority of the second device is lower than a second preset priority; and if the routing device priority of the second routing device is lower than the second preset priority, determine that the second routing device is a DRother.

With reference to the second aspect or any possible implementation manner of the first possible implementation manner to the third possible implementation manner of the second aspect, in a sixth possible implementation manner, the determining module is specifically configured to check whether a routing device priority of the second routing device is 0; and if the routing device priority of the second routing device is 0, determine that the second routing device is a DRother.

With reference to the second aspect or any possible implementation manner of the first possible implementation manner to the sixth possible implementation manner of the second aspect, in a seventh possible implementation manner, the determining module is further configured to: before determining whether the routing device and the second routing device are both DRothers, check whether the interface state of the routing device is a DR, BDR, or DRother election completion state; and

the determining, by the determining module, whether the routing device and the second routing device are both DRothers is executed when the determining module determines that the interface state of the routing device is the DR, BDR, or DRother election completion state.

With reference to the second aspect or any possible implementation manner of the first possible implementation manner to the seventh possible implementation manner of the second aspect, in an eighth possible implementation manner, the neighbor relationship establishment packet is a Hello packet.

According to the neighbor relationship processing method and the routing device provided in the embodiments of the present invention, a first routing device receives a packet that is sent by a second routing device and used for requesting establishment of a neighbor relationship; and when the first routing device and the second routing device are both DRothers, the first routing device discards the packet used for requesting establishment of a neighbor relationship, which reduces the number of neighbors maintained by the first routing device and reduces an occupation ratio of a system resource of the first routing device, such as a CPU or memory.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic flowchart of a neighbor relationship processing method according to Embodiment 1 of the present invention;
FIG. 2 is a schematic flowchart of a neighbor relationship processing method according to Embodiment 2 of the present invention;
FIG. 3 is a schematic flowchart of a neighbor relationship processing method according to Embodiment 3 of the present invention;
FIG. 4 is a schematic flowchart of a neighbor relationship processing method according to Embodiment 4 of the present invention;
FIG. 5 is a schematic flowchart of a neighbor relationship processing method according to Embodiment 5 of the present invention;
FIG. 6 is a schematic structural diagram of a routing device according to Embodiment 1 of the present invention; and
FIG. 7 is a schematic structural diagram of a routing device according to Embodiment 2 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

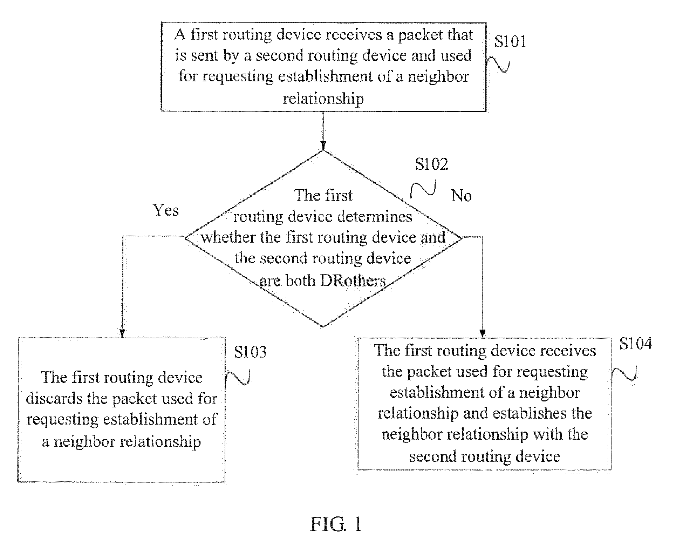

FIG. 1 is a schematic flowchart of a neighbor relationship processing method according to Embodiment 1 of the present invention, including:
S101: A first routing device receives a packet that is sent by a second routing device and used for requesting establishment of a neighbor relationship.

In a same broadcasting network, a neighbor relationship is established between routing devices by using a packet that is used to request establishment of the neighbor relationship. A second routing device sends, to a first routing device, a packet used for requesting establishment of a neighbor relationship. Any routing device that is capable of receiving a packet that is sent by the second routing device and used for requesting establishment of a neighbor relationship may serve as the first routing device. The first routing device receives the packet that is sent by the second routing device and used for requesting establishment of a neighbor relationship. Optionally, the packet used for requesting establishment of a neighbor relationship may carry information about neighbors of the second routing device. Therefore, a size of the packet used for requesting establishment of a neighbor relationship depends on the number of the neighbors of the second routing device.

S102: The first routing device determines whether the first routing device and the second routing device are both DRothers; if yes, executes S103; and optionally, if not, executes S104.

S103: The first routing device discards the packet used for requesting establishment of a neighbor relationship.

Optionally, S104: The first routing device receives the packet used for requesting establishment of a neighbor relationship, and establishes the neighbor relationship with the second routing device.

After receiving the packet that is sent by the second routing device and used for requesting establishment of a neighbor relationship, the first routing device determines whether the first routing device and the second routing device are both DRothers, and if the first routing device and the second routing device are both DRothers, the first routing device discards the packet that is sent by the second routing device and used for requesting establishment of a neighbor relationship. In a broadcasting network, states of a neighbor relationship between routing devices are classified, from low to high, into: a failed (Down) state, an initial (Init) state, a 2-way communication (2-way) state, an information exchange start (Exstart) state, an information exchange (Exchange) state, an information loading (Loading) state, and a fully adjacent (FULL) state. A higher-level neighbor state must be established on a basis of a previous-level neighbor state. A link state database is not exchanged between neighbors in a state lower than the Exstart state; however, a packet used for requesting establishment of a neighbor relationship needs to be sent to each other for maintaining the neighbor relationship, where the packet used for requesting establishment of a neighbor relationship may be a Hello packet. In the prior art, a 2-way neighbor relationship is maintained between DRothers. For the 2-way neighbor relationship, a packet used for requesting establishment of a neighbor relationship needs to be sent between routing devices to maintain the neighbor relationship. For example, the packet used for requesting establishment of a neighbor relationship may be a Hello packet. However, a link state database is not exchanged for the 2-way neighbor relationship, and such relationship cannot serve as a basis for establishing a shortest path tree by the routing devices. A FULL neighbor relationship is established between a DRother and a DR or DBR to establish a shortest path tree and calculate a routing device table. Therefore, a neighbor relationship may not be established between DRothers. According to the embodiment of the present invention, in a manner of discarding a packet used for requesting establishment of a neighbor relationship, it is implemented that a neighbor relationship is not established between DRothers.

Compared with the prior art, in the neighbor relationship processing method provided in Embodiment 1 of the present invention, a neighbor relationship is not established between DRothers, which reduces the number of neighbors maintained by a DRother routing device. A neighbor relationship is established between a DRother and a DR, or a neighbor relationship is established between a DRother and a BDR, and a link state database is exchanged, to establish a shortest path tree and calculate a routing table.

It should be noted that the method provided in the embodiment of the present invention may be applied between OSPF routing devices, or between Intermediate System to Intermediate System (Intermediate System-to-Intermediate System, hereinafter referred to as IS-IS) routing devices, or between other routing devices that establish a neighbor relationship by using a packet used for establishing a neighbor relationship, which is not limited by the present invention.

According to this embodiment, by performing a step that a first routing device discards a packet used for requesting establishment of a neighbor relationship if the first routing device and a second routing device are both other designated routing devices DRothers, the number of neighbors maintained by the first routing device is reduced, and an occupation ratio of a system resource of the first routing device, such as a CPU or memory, is reduced. In addition, because a size of a neighbor relationship establishment packet depends on the number of neighbors, when the number of neighbors maintained by a routing device is relatively large, the packet used for requesting establishment of a neighbor relationship is relatively large, and fragmentation and transmission are required, which may cause a problem of fragment loss or a reassembly failure. However, in this embodiment, the number of neighbors maintained by the routing device is reduced, and therefore, the size of the packet used for requesting establishment of a neighbor relationship is reduced and a success rate for establishing a neighbor relationship may be improved. Moreover, because the size of the packet used for requesting establishment of a neighbor relationship is reduced, total bandwidth required by a packet used for requesting establishment of a neighbor relationship and transmitted in a network within a same time is reduced, thereby reducing transmission bandwidth and alleviating network transmission pressure.

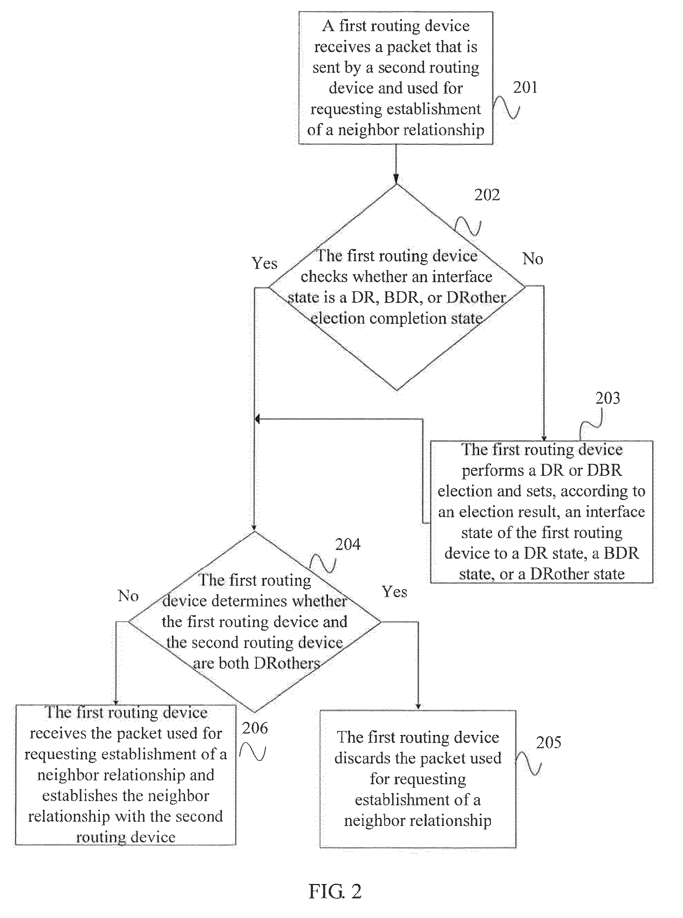

FIG. 2 is a schematic flowchart of a neighbor relationship processing method according to Embodiment 2 of the present invention. As shown in FIG. 2, the method includes:
S201: A first routing device receives a packet that is sent by a second routing device and used for requesting establishment of a neighbor relationship.

Optionally, the packet used for requesting establishment of a neighbor relationship may be a Hello packet.

S202: The first routing device checks whether an interface state is a DR, BDR, or DRother election completion state; if not, executes S203; and if yes, executes S204.

Specifically, after a DR or BDR election is already complete in a broadcasting network, an interface state of each routing device in the network is set to a corresponding DR state, DRT state, or DRother state; and if the DR or BDR election is not complete, the interface state of each routing device in the network is another state, for example, a waiting (waiting) state.

After the first routing device receives the packet that is sent by the second routing device and used for requesting establishment of a neighbor relationship, the first routing device first checks whether the interface state of the first routing device is the DR, BDR, or DRother election completion state.

S203: The first routing device performs a DR or DBR election and sets, according to an election result, the interface state of the first routing device to a DR state, a BDR state, or a DRother state; and executes S204.

Specifically, a manner of performing a DR or DBR election in a network already has a complete implementation solution in the prior art, and is not described herein again. It should be noted that an election state is a 40s temporary state. After the election is complete, in the broadcasting network, each routing device does not store a neighbor relationship that is established during the election.

S204: The first routing device determines whether the first routing device and the second routing device are both DRothers; if yes, executes S205; and if not, executes S206.

Specifically, that the first routing device determines whether the first routing device and the second routing device are both DRothers is executed when the first routing device determines that the interface state of the first routing device is the DR, BDR, or DRother election completion state.

That the first routing device determines whether the first routing device is a DRother includes the following three cases:
First case: The first routing device checks whether the interface state of the first routing device is DRother, and if the interface state of the first routing device is DRother, the first routing device determines that the first routing device is a DRother.

For example, in a same broadcasting network, a routing device with a highest priority is a DR, a routing device with a second highest priority is a BDR, and a remaining routing device is a DRother. Therefore, the first routing device checks whether the interface state of the first routing device is DRother, and if the interface state of the first routing device is DRother, the first routing device determines that the first routing device is a DRother.

Second case: The first routing device checks whether a routing device priority of the first routing device is lower than a first preset priority, and if the priority of the first routing device is lower than the first preset priority, the first routing device determines that the first routing device is a DRother.

For example, in a same broadcasting network, routing device priorities include highest, second highest, and others. For example, in a broadcasting network, there are 10 routing devices, and routing device priorities are 0, 1, 2, 3, 4, 5, 6, 7, 8, and 9, respectively. Then, a routing device with a routing device priority of 9 is a DR and a routing device with a routing device priority of 8 is a BDR. The first preset priority may be any one of priorities 1 to 8. If the first preset priority is 5, and if the routing device priority of the first routing device is any one of priorities 0, 1, 2, 3, and 4 in the network, the first routing device may determine that the first routing device is a DRother.

Third case: The first routing device checks whether a routing device priority of the first routing device is 0, and if the routing device priority of the first routing device is 0, the first routing device determines that the first routing device is a DRother.

That the first routing device determines whether the second routing device is a DRother includes the following three cases:
First case: The first routing device checks whether an interface state of the second routing device is DRother, and if the interface state of the second routing device is DRother, the first routing device determines that the second routing device is a DRother.

For example, in a same broadcasting network, a routing device with a highest priority is a DR, a routing device with a second highest priority is a BDR, and a remaining routing device is a DRother. Therefore, the first routing device checks whether the interface state of the second routing device is DRother, and if the interface state of the second routing device is DRother, the first routing device determines that the second routing device is a DRother.

Second case: The first routing device checks whether a routing device priority of the second routing device is lower than a second preset priority, and if the routing device priority of the second routing device is lower than the second preset priority, the first routing device determines that the second routing device is a DRother.

For example, in a same broadcasting network, routing device priorities include highest, second highest, and others. For example, in a broadcasting network, there are 10 routing devices, and routing device priorities are 0, 1, 2, 3, 4, 5, 6, 7, 8, and 9, respectively. Then, a routing device with a routing device priority of 9 is a DR and a routing device with a routing device priority of 8 is a BDR. The second preset priority may be any one of priorities 1 to 8. If the second preset priority is 5, and if the routing device priority of the second routing device is any one of priorities 0, 1, 2, 3, and 4 in the network, the first routing device may determine that the second routing device is a DRother.

It should be noted that the second preset priority may be the same as or different from the first preset priority, and a different value is set according to an actual application environment.

Third case: The first routing device checks whether a routing device priority of the second routing device is 0, and if the routing device priority of the second routing device is 0, the first routing device determines that the second routing device is a DRother.

A combination of any one of the foregoing cases in which the first routing device determines whether the first routing device is a DRother and any one of the foregoing cases in which the first routing device determines whether the second routing device is a DRother may serve as a basis for determining, by the first routing device, whether the first routing device and the second routing device are both DRothers.

S205: The first routing device discards the packet used for requesting establishment of a neighbor relationship.

The first routing device discards the packet that is sent by the second routing device and used for requesting establishment of a neighbor relationship, that is, the first routing device does not establish a neighbor relationship with the second routing device.

S206: The first routing device receives the neighbor relationship establishment packet and establishes the neighbor relationship with the second routing device.

When one of the first routing device or the second routing device is not a DRother, the first routing device receives the neighbor relationship establishment packet sent by the second routing device and establishes the neighbor relationship with the second routing device.

In this embodiment, a first routing device determines whether the first routing device and a second routing device are both DRothers, and determines whether to discard a packet that is sent by the second routing device and used for requesting establishment of a neighbor relationship, and whether to establish the neighbor relationship with the second routing device, which reduces the number of neighbors maintained by the first routing device and reduces an occupation ratio of a system resource of the first routing device, such as a CPU or memory. In addition, because a size of the packet used for requesting establishment of a neighbor relationship depends on the number of neighbors, when the number of neighbors maintained by a routing device is relatively large, the packet used for requesting establishment of a neighbor relationship is relatively large, and fragmentation and transmission are required, which may cause a problem of fragment loss or a reassembly failure. However, in this embodiment, the number of neighbors maintained by the routing device is reduced, and therefore, the size of the packet used for requesting establishment of a neighbor relationship is reduced and a success rate for establishing a neighbor relationship may be improved. Moreover, because the size of the packet used for requesting establishment of a neighbor relationship is reduced, total bandwidth required by a packet used for requesting establishment of a neighbor relationship and transmitted in a network within a same time is reduced, thereby reducing transmission bandwidth and alleviating network transmission pressure.

The following uses several specific embodiments to describe in detail the embodiment shown in FIG. 2.

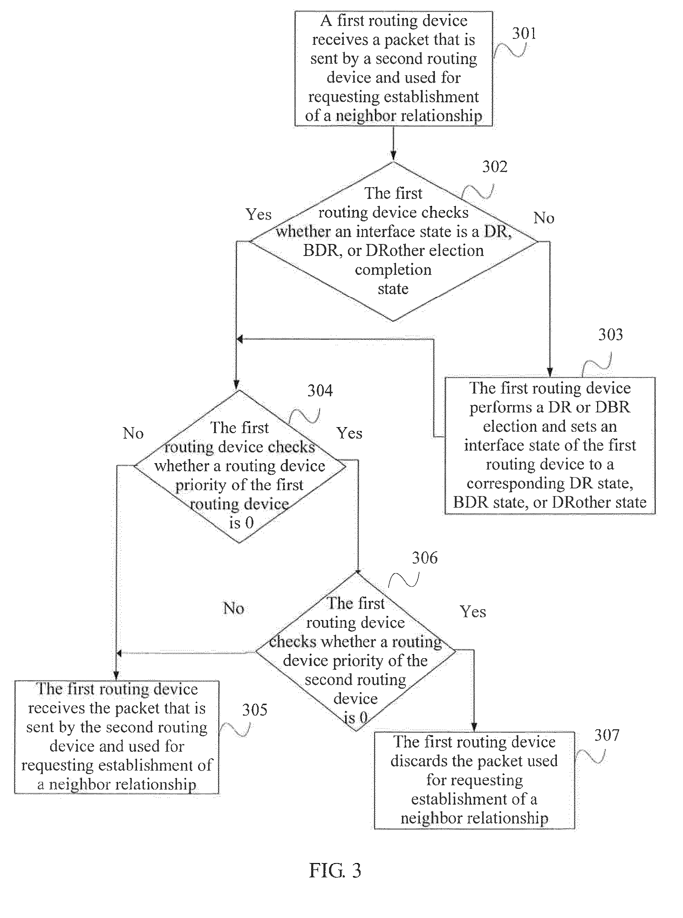

FIG. 3 is a schematic flowchart of a neighbor relationship processing method according to Embodiment 3 of the present invention. In FIG. 3, on a basis of the embodiment shown in FIG. 2, a combination of a third case in which a first routing device determines whether the first routing device is a DRother and a third case in which the first routing device determines whether a second routing device is a DRother is used, and the first routing device determines that the first routing device and the second routing device are both DRothers. As shown in FIG. 3, the method includes:
S301: A first routing device receives a packet that is sent by a second routing device and used for requesting establishment of a neighbor relationship.
S302: The first routing device checks whether an interface state is a DR, BDR, or Drother election completion state; if not, executes S303; and if yes, executes S304.
S303: The first routing device performs a DR or DBR election and sets the interface state of the first routing device to a corresponding DR state, BDR state, or DRother state; and executes S304.
S304: The first routing device checks whether a routing device priority of the first routing device is 0; if not, executes S305; and if yes, executes S306.
S305: The first routing device receives the packet that is sent by the second routing device and used for requesting establishment of a neighbor relationship.
S306: The first routing device checks whether a routing device priority of the second routing device is 0; if not, executes S305; and if yes, executes S307.
S307: The first routing device discards the packet used for requesting establishment of a neighbor relationship.

According to this embodiment, a first routing device checks whether a routing device priority of the first routing device is 0 and the first routing device checks whether a routing device priority of a second routing device is 0, to determine whether to discard a packet that is sent by the second routing device and used for requesting establishment of a neighbor relationship, which reduces the number of neighbors maintained by the first routing device, and reduces an occupation ratio of a system resource of the first routing device, such as a CPU or memory. In addition, because a size of the packet used for requesting establishment of a neighbor relationship depends on the number of neighbors, when the number of neighbors maintained by a routing device is relatively large, the packet used for requesting establishment of a neighbor relationship is relatively large, and fragmentation and transmission are required, which may cause a problem of fragment loss or a reassembly failure. However, in this embodiment, the number of neighbors maintained by the routing device is reduced, and therefore, the size of the packet used for requesting establishment of a neighbor relationship is reduced and a success rate for establishing a neighbor relationship may be improved. Moreover, because the size of the packet used for requesting establishment of a neighbor relationship is reduced, total bandwidth required by a packet used for requesting establishment of a neighbor relationship and transmitted in a network within a same time is reduced, thereby reducing transmission bandwidth and alleviating network transmission pressure.

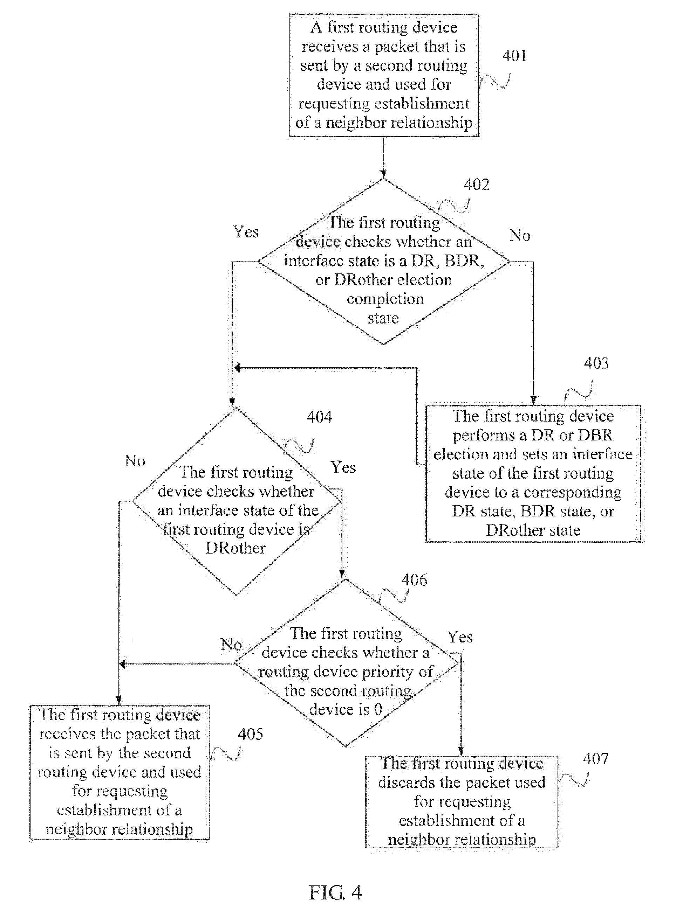

FIG. 4 is a schematic flowchart of a neighbor relationship processing method according to Embodiment 4 of the present invention. In FIG. 4, on a basis of the embodiment shown in FIG. 2, a combination of a first case in which a first routing device determines whether the first routing device is a DRother and a third case in which the first routing device determines whether a second routing device is a DRother is used, and the first routing device determines that the first routing device and the second routing device are both DRothers. As shown in FIG. 4, the method includes:
S401: A first routing device receives a packet that is sent by a second routing device and used for requesting establishment of a neighbor relationship.
S402: The first routing device checks whether an interface state is a DR, BDR, or DRother election completion state; if not, executes S403; and if yes, executes S404.
S403: The first routing device performs a DR or DBR election and sets the interface state of the first routing device to a corresponding DR state, BDR state, or DRother state; and executes S404.
S404: The first routing device checks whether the interface state of the first routing device is DRother; if not, executes S405; and if yes, executes S406.
S405: The first routing device receives the packet that is sent by the second routing device and used for requesting establishment of a neighbor relationship.
S406: The first routing device checks whether a routing device priority of the second routing device is 0; if not, executes S405; and if yes, executes S407.
S407: The first routing device discards the packet used for requesting establishment of a neighbor relationship.

According to this embodiment, a first routing device checks whether an interface state of the first routing device is DRother and the first routing device checks whether a routing device priority of a second routing device is 0, to determine whether to discard a packet that is sent by the second routing device and used for requesting establishment of a neighbor relationship, which reduces the number of neighbors maintained by the first routing device, and reduces an occupation ratio of a system resource of the first routing device, such as a CPU or memory. In addition, because a size of the packet used for requesting establishment of a neighbor relationship depends on the number of neighbors, when the number of neighbors maintained by a routing device is relatively large, the packet used for requesting establishment of a neighbor relationship is relatively large, and fragmentation and transmission are required, which may cause a problem of fragment loss or a reassembly failure. However, in this embodiment, the number of neighbors maintained by the routing device is reduced, and therefore, the size of a neighbor relationship establishment packet is reduced and a success rate for establishing a neighbor relationship may be improved. Moreover, because the size of the packet used for requesting establishment of a neighbor relationship is reduced, total bandwidth required by a packet used for requesting establishment of a neighbor relationship and transmitted in a network within a same time is reduced, thereby reducing transmission bandwidth and alleviating network transmission pressure.

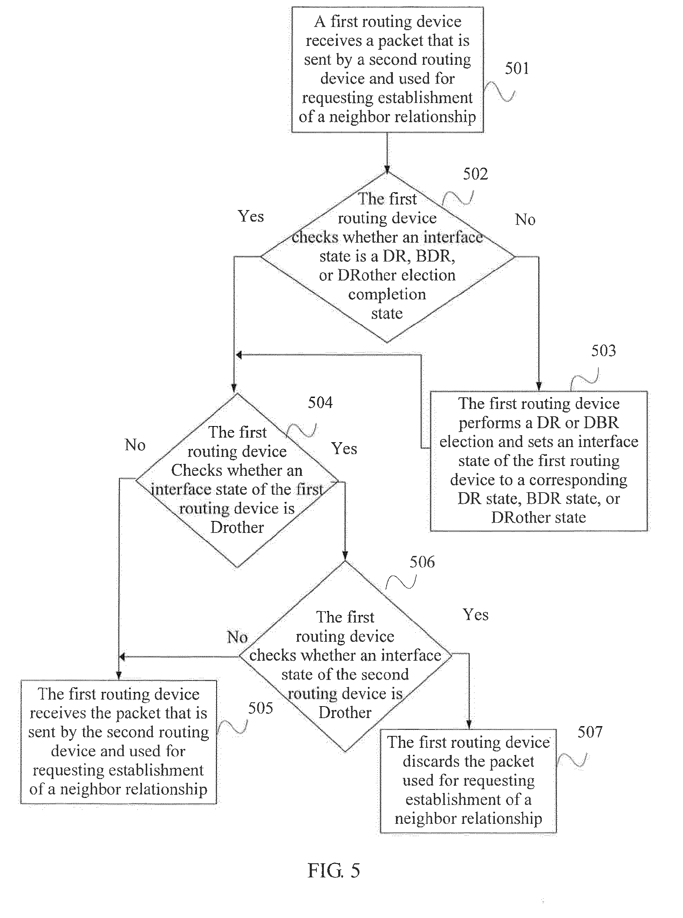

FIG. 5 is a schematic flowchart of a neighbor relationship processing method according to Embodiment 5 of the present invention. In FIG. 5, on a basis of the embodiment shown in FIG. 2, a combination of a first case in which a first routing device determines whether the first routing device is a DRother and a first case in which the first routing device determines whether a second routing device is a DRother is used, and the first routing device determines that the first routing device and the second routing device are both DRothers. As shown in FIG. 5, the method includes:
S501: A first routing device receives a packet that is sent by a second routing device and used for requesting establishment of a neighbor relationship.
S502: The first routing device checks whether an interface state is a DR, BDR, or DRother election completion state; if not, executes S503; and if yes, executes S504.
S503: The first routing device performs a DR or DBR election and sets the interface state of the first routing device to a corresponding DR state, BDR state, or DRother state; and executes S504.
S504: The first routing device checks whether the interface state of the first routing device is DRother; if not, executes S505; and if yes, executes S506.
S505: The first routing device receives the neighbor relationship establishment packet sent by the second routing device.
S506: The first routing device checks whether an interface state of the second routing device is DRother; if not, executes S505; and if yes, executes S507.
S507: The first routing device discards the packet used for requesting establishment of a neighbor relationship.

According to this embodiment, a first routing device checks whether an interface state of the first routing device is DRother and the first routing device checks whether an interface state of a second routing device is DRother, to determine whether to discard a packet that is sent by the second routing device and used for requesting establishment of a neighbor relationship, which reduces the number of neighbors maintained by the first routing device, and reduces an occupation ratio of a system resource of the first routing device, such as a CPU or memory. In addition, because a size of the packet used for requesting establishment of a neighbor relationship depends on the number of neighbors, when the number of neighbors maintained by a routing device is relatively large, the packet used for requesting establishment of a neighbor relationship is relatively large, and fragmentation and transmission are required, which may cause a problem of fragment loss or a reassembly failure. However, in this embodiment, the number of neighbors maintained by the routing device is reduced, and therefore, the size of the packet used for requesting establishment of a neighbor relationship is reduced and a success rate for establishing a neighbor relationship may be improved. Moreover, because the size of the packet used for requesting establishment of a neighbor relationship is reduced, total bandwidth required by a packet used for requesting establishment of a neighbor relationship and transmitted in a network within a same time is reduced, thereby reducing transmission bandwidth and alleviating network transmission pressure.

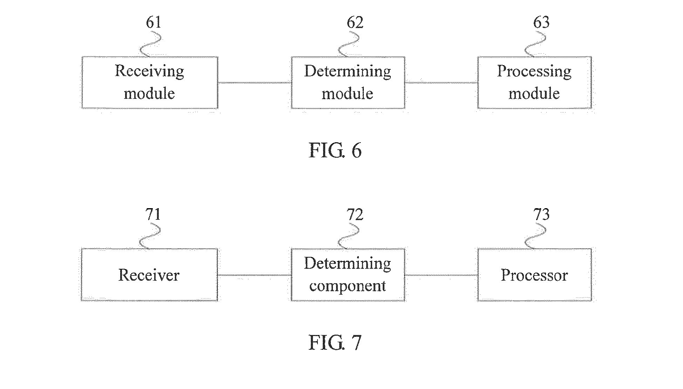

FIG. 6 is a schematic structural diagram of a routing device according to Embodiment 1 of the present invention. As shown in FIG. 6, the routing device according to this embodiment includes a receiving module 61, a determining module 62, and a processing module 63, where the receiving module 61 is configured to receive a packet that is sent by a second routing device and used for requesting establishment of a neighbor relationship; the determining module 62 is configured to determine whether the routing device and the second routing device are both non-designated routing devices DRothers; and the processing module 63 is configured to: if the routing device and the second routing device are both DRothers, discard the packet used for requesting establishment of a neighbor relationship.

The routing device in this embodiment may be configured to execute the technical solution of the method embodiment shown in FIG. 1, implementation principles and technical effects thereof are similar, and details are not described herein again.

In the foregoing embodiment, when the determining module 62 is configured to determine whether the routing device is a DRother, optionally, the determining module 62 is specifically configured to check whether an interface state of the routing device is DRother, and if the interface state of the routing device is DRother, determine that the routing device is a DRother; or, the determining module 62 is specifically configured to check whether a routing device priority of the routing device is lower than a first preset priority, and if the routing device priority of the routing device is lower than the first preset priority, determine that the routing device is a DRother; or, the determining module 62 is specifically configured to check whether a routing device priority of the routing device is 0, and if the routing device priority of the routing device is 0, determine that the routing device is a DRother.

In the foregoing embodiment, when the determining module 62 is configured to determine whether the second routing device is a DRother, optionally, the determining module 62 is specifically configured to check whether an interface state of the second routing device is DRother, and if the interface state of the second router is DRother, determine that the second routing device is a DRother; or, the determining module 62 is specifically configured to check whether a routing device priority of the second routing device is lower than a second preset priority, and if the routing device priority of the second routing device is lower than the second preset priority, determine that the second routing device is a DRother; or, the determining module 62 is specifically configured to check whether a routing device priority of the second routing device is 0, and if the routing device priority of the second routing device is 0, determine that the second routing device is a DRother.

In the foregoing embodiment, the determining module 62 is further configured to: before determining whether the routing device and the second routing device are both DRothers, check whether the interface state of the routing device is a DR, BDR, or DRother election completion state. That the determining module 62 determines whether the routing device and the second routing device are both DRothers is executed when the determining module 62 determines that the interface state of the routing device is the DR, BDR, or DRother election completion state.

In the foregoing embodiment, the packet used for requesting establishment of a neighbor relationship is a Hello packet.

The routing device in this embodiment may be configured to execute the technical solution of the method embodiment shown in FIG. 2, implementation principles and technical effects thereof are similar, and details are not described herein again.

FIG. 7 is a schematic structural diagram of a routing device according to Embodiment 2 of the present invention. As shown in FIG. 7, the routing device of this embodiment includes a receiver 71, a determining component 72, and a processor 73, where the receiver 71 is configured to receive a packet that is sent by a second routing device and used for requesting establishment of a neighbor relationship; the determining component 72 is configured to determine whether the routing device and the second routing device are both non-designated routing devices DRothers; and the processor 73 is configured to: if the routing device and the second routing device are both DRothers, discard the packet used for requesting establishment of a neighbor relationship.

The routing device in this embodiment may be configured to execute the technical solution of the method embodiment shown in FIG. 1, implementation principles and technical effects thereof are similar, and details are not described herein again.

In the foregoing embodiment, when the determining component 72 is configured to determine whether the routing device is a DRother, optionally, the determining component 72 is specifically configured to check whether an interface state of the routing device is DRother, and if the interface state of the routing device is DRother, determine that the routing device is a DRother; or, the determining component 72 is specifically configured to check whether a routing device priority of the routing device is lower than a first preset priority, and if the routing device priority of the routing device is lower than the first preset priority, determine that the routing device is a DRother; or, the determining component 72 is specifically configured to check whether a routing device priority of the routing device is 0, and if the routing device priority of the routing device is 0, determine that the routing device is a DRother.

In the foregoing embodiment, when the determining component 72 is configured to determine whether the second routing device is a DRother, optionally, the determining component 72 is specifically configured to check whether an interface state of the second routing device is DRother, and if the interface state of the second router is DRother, determine that the second routing device is a DRother; or
the determining component 72 is specifically configured to check whether a routing device priority of the second routing device is lower than a second preset priority, and if the routing device priority of the second routing device is lower than the second preset priority, determine that the second routing device is a DRother; or, the determining component 72 is specifically configured to check whether a routing device priority of the second routing device is 0, and if the routing device priority of the second routing device is 0, determine that the second routing device is a DRother.

In the foregoing embodiment, the determining component 72 is further configured to: before determining whether the routing device and the second routing device are both DRothers, check whether the interface state of the routing device is a DR, BDR, or DRother election completion state. That the determining component 72 determines whether the routing device and the second routing device are both DRothers is executed when the determining component 72 determines that the interface state of the routing device is the DR, BDR, or DRother election completion state.

In the foregoing embodiment, the packet used for requesting establishment of a neighbor relationship is a Hello packet.

The routing device in this embodiment may be configured to execute the technical solution of the method embodiment shown in FIG. 2, implementation principles and technical effects thereof are similar, and details are not described herein again.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A neighbor relationship processing method, comprising:
receiving, by a first routing device, a packet that is sent by a second routing device and used for requesting establishment of a neighbor relationship;
determining, by the first routing device, whether the first routing device and the second routing device are both non-designated routing devices DRothers; and
if the first routing device determines that the first routing device and the second routing device are both DRothers, discarding, by the first routing device, the packet used for requesting establishment of a neighbor relationship.

2. The method according to claim 1, wherein the determining, by the first routing device, whether the first routing device is a DRother comprises:
checking, by the first routing device, whether an interface state of the first routing device is DRother, and if the interface state of the first routing device is DRother, determining, by the first routing device, that the first routing device is a DRother.

3. The method according to claim 1, wherein the determining, by the first routing device, whether the first routing device is a DRother comprises:
checking, by the first routing device, whether a routing device priority of the first routing device is lower than a first preset priority, and if the priority of the first routing device is lower than the first preset priority, determining, by the first routing device, that the first routing device is a DRother.

4. The method according to claim 1, wherein the determining, by the first routing device, whether the first routing device is a DRother comprises:
checking, by the first routing device, whether a routing device priority of the first routing device is 0, and if the routing device priority of the first routing device is 0, determining, by the first routing device, that the first routing device is a DRother.

5. The method according to any one of claims 1 to 4, wherein the determining, by the first routing device, whether the second routing device is a DRother comprises:
checking, by the first routing device, whether an interface state of the second routing device is DRother, and if the interface state of the second routing device is DRother, determining, by the first routing device, that the second routing device is a DRother.

6. The method according to any one of claims 1 to 4, wherein the determining, by the first routing device, whether the second routing device is a DRother comprises:
checking, by the first routing device, whether a routing device priority of the second routing device is lower than a second preset priority, and if the routing device priority of the second routing device is lower than the second preset priority, determining, by the first routing device, that the second routing device is a DRother.

7. The method according to any one of claims 1 to 4, wherein the determining, by the first routing device, whether the second routing device is a DRother comprises:
checking, by the first routing device, whether a routing device priority of the second routing device is 0, and if the routing device priority of the second routing device is 0, determining, by the first routing device, that the second routing device is a DRother.

8. The method according to any one of claims 1 to 7, wherein before the determining, by the first routing device, whether the first routing device and the second routing device are both DRothers, the method further comprises:
checking, by the first routing device, whether the interface state of the first routing device is a DR, BDR, or DRother election completion state; and
the determining, by the first routing device, whether the first routing device and the second routing device are both DRothers is executed when the first routing device determines that the interface state of the first routing device is the DR, BDR, or DRother election completion state.

9. The method according to any one of claims 1 to 8, wherein the packet used for requesting establishment of a neighbor relationship is a Hello packet.

10. A routing device, comprising:
a receiving module, configured to receive a packet that is sent by a second routing device and used for requesting establishment of a neighbor relationship;
a determining module, configured to determine whether the routing device and the second routing device are both non-designated routing devices DRothers; and
a processing module, configured to: if the routing device and the second routing device are both DRothers, discard the packet used for requesting establishment of a neighbor relationship.

11. The routing device according to claim 10, wherein the determining module is specifically configured to check whether an interface state of the routing device is DRother; and if the interface state of the routing device is DRother, determine that the routing device is a DRother.

12. The routing device according to claim 10, wherein the determining module is specifically configured to check whether a routing device priority of the routing device is lower than a first preset priority; and if the routing device priority of the routing device is lower than the first preset priority, determine that the routing device is a DRother.

13. The routing device according to claim 10, wherein the determining module is specifically configured to check whether a routing device priority of the routing device is 0; and if the routing device priority of the routing device is 0, determine that the routing device is a DRother.

14. The routing device according to any one of claims 10 to 13, wherein the determining module is specifically configured to check whether an interface state of the second routing device is DRother; and if the interface state of the second router is DRother, determine that the second routing device is a DRother.

15. The routing device according to any one of claims 10 to 13, wherein the determining module is specifically configured to check whether a routing device priority of the second device is lower than a second preset priority; and if the routing device priority of the second routing device is lower than the second preset priority, determine that the second routing device is a DRother.

16. The routing device according to any one of claims 10 to 13, wherein the determining module is specifically configured to check whether a routing device priority of the second routing device is 0; and if the routing device priority of the second routing device is 0, determine that the second routing device is a DRother.

17. The routing device according to any one of claims 10 to 16, wherein the determining module is further configured to: before determining whether the routing device and the second routing device are both DRothers, check whether the interface state of the routing device is a DR, BDR, or DRother election completion state; and
the determining, by the determining module, whether the routing device and the second routing device are both DRothers is executed when the determining module determines that the interface state of the routing device is the DR, BDR, or DRother election completion state.

18. The routing device according to any one of claims 10 to 17, wherein the packet used for requesting establishment of a neighbor relationship is a Hello packet.
